# EUROPEAN PATENT SPECIFICATION

(11) **EP 2 659 540 B1**
(45) Date of publication and mention of the grant of the patent: **07.03.2018**
(21) Application number: 11853254.8
(22) Date of filing: 28.12.2011
(51) Int. Cl.: H01M 10/06, H01M 10/613, H01M 10/625, H01M 10/647, H01M 10/65, H01M 10/654, H01M 10/6556, H01M 10/6567, H01M 2/02, H01M 2/04, H01M 2/26, H01M 10/48, H01M 10/6553, H01M 10/615, H01M 10/653, H01M 10/6551, H01M 10/6554

(54) **BATTERY**
BATTERIE
BATTERIE

(30) Priority: 31.12.2010 CN 201010622284; 22.04.2011 CN 201010621585
(43) Date of publication of application: 06.11.2013
(73) Proprietor: Shenzhen BYD Auto R&D Company Limited, Shenzhen, Guangdong 518118 (CN); BYD Company Limited, Shenzhen, Guangdong 518118 (CN)
(72) Inventor: LIU, Jianguo, Shenzhen Guangdong 518118 (CN); TONG, Zhiwei, Shenzhen Guangdong 518118 (CN)
(74) Representative: Hoffmann Eitle
(86) International application number: PCT/CN2011/084860
(87) International publication number: WO 2012/089133

(56) References cited:
- EP-A1- 0 620 610
- EP-A1- 0 887 876
- EP-A1- 1 213 783
- WO-A1-2011/009619
- CN-A- 1 121 376
- CN-U- 201 498 556
- CN-U- 201 498 556
- CN-U- 201 498 556
- CN-U- 201 936 949
- CN-U- 201 936 949
- CN-U- 201 985 215
- CN-Y- 2 548 268
- CN-Y- 2 773 919
- DE-A1-102009 027 178
- GB-A- 2 068 633
- US-A- 6 146 786
- US-A1- 2010 151 301
- US-A1- 2010 279 159

## Description

### FIELD

The present disclosure relates to the field of energy storage, more particularly to a battery.

### BACKGROUND

The statements in this section merely provide background information related to the present disclosure and may or may not constitute prior art.

With the exhaustion of the global energy resources and the growing emphasis of environmental protection, electrical vehicles (EV) and hybrid electrical vehicles (HEV) have drawn attention of people widely due to their advantages such as low exhaust emissions and low energy consumption. The power battery is one of the most important parts of the EV/HEV vehicles, which requires high power, long cycling life and excellent environmental tolerance.

US 6146786A relates to a nickel-hydrogen energy storage cell. The storage cell comprises at least one, and preferably a plurality of individual plate sets. Each plate set in turn comprises an anode or positive electrode, a cathode or negative electrode, and an electrolyte-containing separator, which physically separates the electrodes and also supplies the electrolyte medium through which ionic and electronic charge transfer. The individual plate sets are assembled onto a central core to form a stacked array. The stacked array is contained within a hermetically sealed pressure vessel having a wall and an interior. US 6146786A provides an electrochemical energy storage cell in which the weight is reduced. Electrical, mechanical, and thermal efficiency of the storage cell are improved. Weight is reduced by combining the support, electrical, and thermal functions into a single structure.

US20100151301 relates to a battery including: an electrode assembly, a main body to house the electrode assembly and a cooling hole, wherein the cooling hole extends in a second direction perpendicular to a first direction; and terminals that extend from the electrode assembly in the first direction. GB2068633A relates to a battery construction comprising positive and negative electrodes provided with tabs, the tabs of the positive and negative electrodes being arranged relative to one another and being of sufficient extent to enable the promoting of uniform electrode current density.

EP1213783 A1 relates to a battery including a metallic container delimiting a cavity containing an electrolyte and a composite strip formed by a first metallic sheet coated with a material forming the positive electrode, by a second metallic strip coated with a material forming the negative electrode and by porous insulating separators, said composite strip being wound onto a core located at the center of the cavity and said electrodes being connected by connecting means to external terminals.

EP0620610 A1 relates to a battery. The battery has a through-hole traversing a battery main body and opened to the outside. The battery has a vessel having a central through-hole, and a spiral-shaped electrode, made up of a strip-shaped positive electrode and a strip-shaped negative electrode wound about a cylindrical core a number of times with a separator in-between, is mounted in the battery vessel so that an opening of the cylindrical core is substantially coincident with the through-hole in the battery vessel. The battery vessel is sealed after charging a liquid electrolyte. One or more thin metal plates are inserted and secured in the through-hole, or one or more heat-dissipating fins are radially formed around the opening end of the through-hole.

EP0887876 A1 relates to a cylinder-shaped secondary battery including a container, and a rolled electrode. The container includes a cylinder-shaped inner member, a cylinder-shaped outer member, and a pair of ring-shaped end plates. The electrode is accommodated in the container in an electrically insulating manner, rolled spirally, and has a pair of tabs and a hollow formed therein and extending in an axial direction thereof. Moreover, the electrode includes a positive electrode, a negative electrode and a separator disposed between the positive electrode and negative electrode so as to separate them.

DE102009027178 A1 relates to a battery cell comprising a housing and arranged in the housing nucleus, wherein the nucleus comprises a winding having an axial winding of at least three layers, an anode layer, a cathode layer and a separator, wherein the anode layer at one axial end of the coil is combined to form an electrode and connected with a negative pole of the cell and the cathode layer is combined with an electrode at the opposite axial end of the coil and connected to a positive pole of the cell, wherein one of
the electrodes is connected with at least one electrode heat conductor arranged in the housing in a thermally conductive manner and the at least one electrode heat conductor is thermally conductively connected to a heat exchanger disposed outside of the housing.

WO2011009619 A1 relates to an electrochemical energy storage. The electrochemical energy storage comprises at least two electric current collectors for electrically connecting the electrochemical energy storage within an application environment.

US2010279159 A1 relates to an electrochemical single cell for a battery, and battery made from said single cells. The single cell comprises an electrode stack wound around a heat conducting bar and/or folded around a heat conducting bar.

CN201498556 U relates to a wound lead-acid battery, includes a case with a cover plate, the cover plate used for sealing an open end of the case, an electric core received in the case, the electric core has a tube, the tube penetrates an opening in the cover plate, and electrolyte injected in the space is restricted by the case and the cover plate.

### SUMMARY

The present invention provides a battery as defined in the claims.

In viewing thereof, the present disclosure is directed to solve at least one of the problems existing in the prior art. Therefore, a battery may need to be provided, which may have a homogenized and controllable internal temperature.

According to an embodiment of the present disclosure, a battery may be provided. The battery may comprise: a battery housing having at least an opening end; a battery cover sealing the opening end; an electric core received in the battery housing which comprises at least a heat-conducting member, the heat-conducting member having at least an end penetrating through the battery cover; and an electrolyte filled in a space formed by the battery housing with the battery cover.

With the battery according to an embodiment the present disclosure, the battery core includes the heat-conducting member which may adjust the internal temperature of the battery core. When the internal temperature of the battery core rises quickly or the battery is in an extreme thermal environment, the heat-conducting member may transfer the internal heat in the battery core and cool the battery quickly, thus preventing the further thermal reaction of substances in the electrodes, avoiding potential safety risks such as explosion caused by heat accumulation and slow heat dissipation, and enhancing the safety of the battery. At the same time, the heat-conducting member may ensure the internal temperature consistency inside the battery, so that the battery always works in a superior state to enhance the cycling performance of the battery. When the battery is in an extreme cold or hot environment, the heat-conducting member may transfer heat quickly, for example, transfer heat between a heat accumulated region, such as positive and negative tabs, and a current collector in the electric core, thus ensuring the internal temperature balance of the electric core. Therefore, not only will large heat not be accumulated on the positive and negative tabs to avoid potential safety risks so that the battery may be always in an excellent operating state, but also the temperature balance of positive and negative electrodes inside the battery may be ensured. Moreover, because the heat may be quickly transferred, the temperature of the battery core may quickly reach a predetermined temperature to ensure the operating performance of the electric core, and consequently the battery may operate in various complex environments. Furthermore, the heat-conducting member is disposed in the battery core as a support and/or a backbone for holding the electric core, thus simplifying the assembling, facilitating the winding of the electric core, increasing the compactness of the electric core, and preventing damage to the battery or a battery pack resulted from loosening and deformation of the battery core due to bumpiness and shake of the battery when the battery is moved. Therefore, losses brought by the failure of the battery pack comprising a plurality of batteries connected in series, in parallel or in series and parallel may be avoided.

Additional aspects and advantages of the embodiments of the present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of the disclosure will become apparent and more readily appreciated from the following descriptions taken in conjunction with the drawings in which:
Fig. 1 is a cross-sectional view of a heat-conducting member according to Embodiment 1 of the present disclosure;
Fig. 2 is a sectional view of an insulating roll core in a battery according to Embodiment 1 of the present disclosure;
Fig. 3 is a perspective view of an electric core in a battery according to Embodiment 1 of the present disclosure;
Fig. 4 is a perspective view of an electric core in a battery according to Embodiment 1 of the present disclosure, with a first connector and a second connector connected to both ends of the electric core;
Fig. 5 is a perspective view of a battery according to Embodiment 1 of the present disclosure;
Fig. 6 is a sectional view of an insulating roll core in a battery according to Embodiment 2 of the present disclosure;
Fig. 7 is a perspective view of an electric core in a battery according to Embodiment 2 of the present disclosure;
Fig. 8 is a perspective view of an electric core in a battery according to Embodiment 2 of the present disclosure, with a first connector and a second connector connected to both ends of the electric core;
Fig. 9 is a perspective view of a battery according to Embodiment 2 of the present disclosure;
Fig. 10 is a perspective view of a battery according to Embodiment 3 of the present disclosure;
Fig. 11 is a cross-sectional view of a heat-conducting tube in a battery according to Embodiment 4 of the present disclosure;
Fig. 12 is a sectional view of an insulating roll core in a battery according to Embodiment 4 of the present disclosure;
Fig. 13 is a perspective view of an electric core in a battery according to Embodiment 4 of the present disclosure;
Fig. 14 is a perspective view of an electric core in a battery according to Embodiment
   4 of the present disclosure, with a first connector and a second connector connected to both ends of the electric core;
Fig. 15 is a partial perspective view of a battery according to Embodiment 4 of the present disclosure;
Fig. 16 is a sectional view of an insulating roll core in a battery according to Embodiment 5 of the present disclosure;
Fig. 17 is a perspective view of an electric core in a battery according to Embodiment 5 of the present disclosure;
Fig. 18 is a perspective view of an electric core in a battery according to Embodiment 5 of the present disclosure, with a first connector and a second connector connected to both ends of the electric core; and
Fig. 19 is a perspective view of a battery according to Embodiment 5 of the present disclosure.

### DETAILED DESCRIPTION

### Embodiment 1

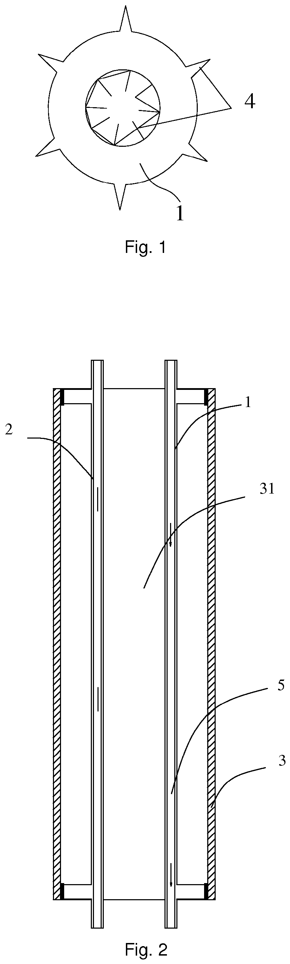

A battery according to Embodiment 1 of the present disclosure will be described in detail with reference to Figs. 1-5. As shown in Fig. 2, two heat-conducting members, i.e., a positive heat-conducting member 1 and a negative heat-conducting member 2, are arranged in parallel. And injection molding is performed on surfaces of the heat-conducting members 1 and 2 so that an insulating roll core 3 is formed with ends of the positive heat-conducting member 1 and the negative heat-conducting member 2 being exposed outside the insulating roll core 3. The positive and negative heat-conducting members 1, 2 are at least partially received in the insulating roll core 3. The insulating filler 31 which is electrically insulating and thermally conductive is filled between the positive and negative heat-conducting members 1, 2. An insulating layer may be formed on an external surface of each of the positive heat-conducting member 1 and the negative heat-conducting member 2, thus achieving electrical insulation between the positive and negative heat-conducting members 1, 2, between the positive heat-conducting member 1 and a positive plate, and between the negative heat-conducting member 2 and a negative plate respectively.

There are no special limitations on the number of the positive heat-conducting member 1 and the negative heat-conducting member 2, which may be determined according to dimensions of the positive heat-conducting member 1, the negative heat-conducting member 2 and an electric core. The heat-conducting member is thermally connected with at least one of the positive tab 61 and the negative tab 62. In one embodiment, the heat-conducting member is a single tube, which may be electrically insulated from both a positive tab 61 and a negative tab 62 whereas thermally connected with the positive tab 61 or the negative tab 62. In another embodiment, the heat-conducting member includes a plurality of tubes, for example, the positive heat-conducting member 1 and the negative heat-conducting member 2 are electrically insulated from each other, and some of the plurality of tubes may be insulated from the positive tab 61 and the negative tab 62 or the other of the plurality of tubes may be thermally connected with the positive tab 61 or the negative tab 62.

There are no special limitations on the materials for the heat-conducting members, which may be conductive materials such as metals having superior thermal conductivity or non-conductive materials such as ceramics having superior thermal conductivity. In some embodiments, when the positive and negative heat-conducting members 1, 2 are made of conductive materials, the positive heat-conducting member 1 needs to be electrically insulated from the negative electrode while electrically connected with the positive tab 61, and the negative heat-conducting member 2 needs to be electrically insulated from the positive tab 61 while electrically connected with the negative tab 62. In other embodiments, when the positive and negative heat-conducting members 1, 2 is made of non-conductive materials, the heat-conducting member, i.e., the positive heat-conducting member 1 or the negative heat-conducting member 2 may be thermally connected with the positive tab 61 and the negative tab 62 simultaneously.

In one embodiment, the positive and negative heat-conducting members 1, 2 may be made of metals, so that the positive and negative heat-conducting members 1, 2 may not only be used as a channel for the thermal conducting medium 5 but also for leading out current to be used as positive and negative terminals or poles of the battery respectively after the positive and negative heat-conducting members 1, 2 are electrically connected with the positive and negative tabs 61, 62 respectively. For example, the positive heat-conducting member 1 may be made of aluminum and the negative heat-conducting member 2 may be made of copper, thus further facilitating the connection between the positive heat-conducting member 1 and the positive tab 61 as well as between the negative heat-conducting member 2 and the negative tab 62, further reducing the internal resistance and accelerating the heat transfer rate. By the positive and negative heat-conducting members 1, 2 mentioned above, the battery is further optimized with simple structure so that the entire connection performance of the battery may be ensured, thus avoiding the breakage, shedding, cold soldering, etc. Meanwhile, the positive heat-conducting member 1 and the negative heat-conducting member 2 are used as the current-leading terminals or poles respectively, so that the current conducting area is increased, thus decreasing resistance thereof. And because the positive heat-conducting member 1 and the negative heat-conducting member 2 are extended as the positive and negative terminals or poles are extended out of the battery cover, it is more convenient for the communication and heat dissipation of the heat-conducting medium flowing in the heat-conducting members, if it is formed with flowing paths thereof, thus decreasing the internal temperature of the battery rapidly.

It should be noted that the positive heat-conducting member 1 or the negative heat-conducting member 2 may be connected with the battery cover to lead out the current. Alternatively, both the positive heat-conducting member 1 and the negative heat-conducting member 2 may penetrate through the battery cover for leading out currents respectively. At this time, at least one of the positive heat-conducting member 1 and the negative heat-conducting member 2 may be electrically insulated from the battery cover. When the positive heat-conducting member 1 is connected with the battery cover for leading out current, the negative heat-conducting member 2 may be connected with the battery housing 90, alternatively, the negative heat-conducting member 2 may penetrate through the battery cover whereas electrically insulated therefrom. When the negative heat-conducting member 2 is connected with the battery cover for leading out current, the positive heat-conducting member 1 may be connected with the battery housing 90, alternatively, the positive heat-conducting member 1 may penetrate through the battery cover whereas electrically insulated therefrom. Alternatively, the positive heat-conducting member 1 and the negative heat-conducting member 2 may penetrate through the battery cover for leading out currents respectively. At this time, the positive heat-conducting member 1 and the negative heat-conducting member 2 are used as the positive and negative terminals or poles of the battery with electrical insulating members being disposed between the positive heat-conducting member 1 and the battery cover as well as between the negative heat-conducting member 2 and the battery cover respectively.

Further, there are no special limitations on the shape of the positive and negative heat-conducting members 1, 2, which may be designed according to the battery core. For example, the heat-conducting member, i.e., the positive heat-conducting member 1 or the negative heat-conducting member 2, may be a straight or bending U-shaped tube. A flowing channel formed in the heat-conducting member for the communication of the thermal conducting medium may have a circular cross section. The thickness of the positive and negative heat-conducting members 1, 2 may range from about 0.1mm to about 5mm, particularly, from about 1mm to about 3mm.

As shown in Fig. 1, the heat-conducting member being formed into a tube shape may be formed with projections 4 on an external surface and an internal surface thereof for heat dissipation, thus increasing the heat conducting area and accelerating the heat transfer rate. That is, a surface of the flowing channel for the thermal conducting medium, i.e., an internal wall of the heat-conducting member may be formed with projections 4. The projections 4 may have a shape of a needle, a cone, a sheet, a column, etc., thus accelerating the heat transfer rate inside the heat-conducting member.

The shape of the insulating roll core 3 may be determined according to the shape of the electric core. The insulating filler 31 filled between the positive heat-conducting member 1 and the negative heat-conducting member 2 may be engineering plastics, for example, polyphenyl sulfide (PPS).

As shown in Fig. 2, there is thermal conducting medium 5 flowing in the heat-conducting member. As shown by arrows in Fig. 2, the thermal conducting medium 5 flows into the electric core from one end of the positive heat-conducting member 1 at a second end of the electric core and flows out of the electric core from the other end of the positive heat-conducting member 1 at a first end of the electric core, and the thermal conducting medium 5 flows into the electric core from one end of the negative heat-conducting member 2 at the first end of the electric core and flows out of the electric core from the other end of the negative heat-conducting member 2 at the second end of the electric core. It should be noted that, the flowing directions of the thermal conducting medium 5 in the positive heat-conducting member 1 and the negative heat-conducting member 2 may be identical or opposed to each other. The thermal conducting medium 5 may be a conductive material or a non-conductive material such as a liquid silica gel. The thermal conducting medium 5 may be selected from liquids such as water, kerosene or ethylene glycol, or gases such as nitrogen or air having excellent thermal conductivity. When the internal temperature of the electric core is high, the heat in the electric core may be quickly transferred by the thermal conducting medium 5 to cool the electric core. When the internal temperature of the electric core is low, the heat transfer may be accelerated, so that the heat in a heat accumulated region such as the positive and negative tabs 61, 62 may be quickly transferred to a current collector in the electric core to ensure the temperature consistency of the battery. Therefore, not only will the heat not be accumulated on the positive and negative tabs 61, 62 to avoid potential safety risks, but also the temperature consistency of positive and negative electrodes of the battery may be ensured. Moreover, because the temperature consistency of the battery is ensured, active substances in positive and negative plates may always have excellent reactivity, and the internal resistance thereof may be decreased, so that the battery may be always in a good operating state to enhance the cycling performance of the battery.

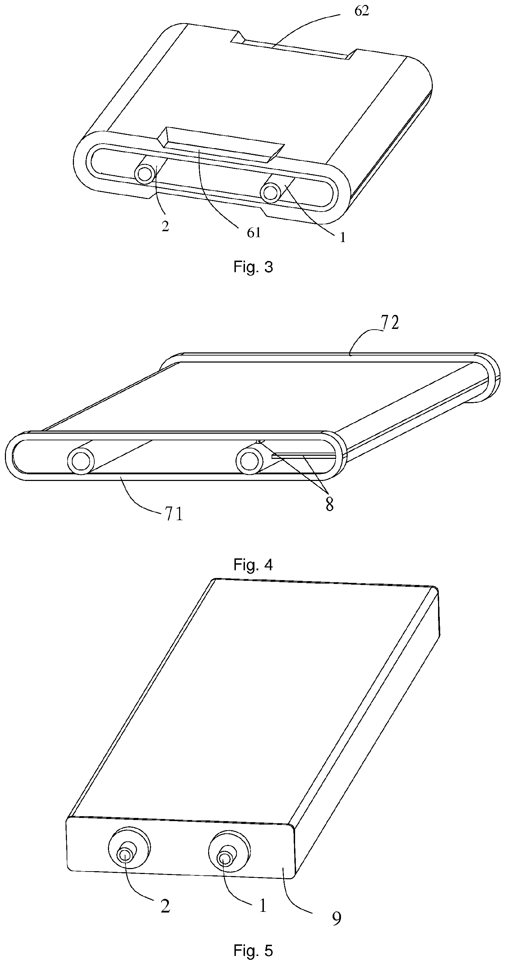

As shown in Fig. 3, a positive plate having the positive tab 61, a negative plate having the negative tab 62 and a separator between the positive plate and the negative plate are wound on an external surface of the insulating roll core 3 to form the electric core. In one embodiment, the positive heat-conducting member 1, the negative heat-conducting member 2 and the insulating layer are integrally formed into the insulating roll core 3 which is wound with the positive plate, the negative plate and the separator between the positive plate and the negative plate to form the desired electric core. By integrally forming the insulating roll core 3 with injection molding, the shape of a support comprising the heat-conducting member may be easily determined according to the shape of the electric core for facilitating battery assembly, and the positive and negative heat-conducting member 1, 2 may be fixed so that the electric core may not be damaged due to shaking. In one embodiment, the insulating roll core 3 is square which is located at the center of the electric core and is used as a support or backbone for holding the electric core, thus increasing a winding compactness of the electric core as well as lowering process difficulty.

The positive plate includes a first coating region with a positive material coated thereon and a first non-coating region without the positive material coated thereon; the negative plate includes a second coating region with a negative material coated thereon and a second non-coating region without the negative material coated thereon; the positive tab 61 is formed by the coiled first non-coating region at the first end of the electric core; and the negative tab 62 is formed by the coiled second non-coating region at the second end of the electric core. The electric core may have a square shape, a circular shape, etc. In another embodiment, the closed annular positive tab 61 may be formed by hot pressing a plurality of coiled first non-coating regions at the first end of the electric core, and the negative tab 62 may be formed by hot pressing a plurality of coiled second non-coating regions at the second end of the electric core.

In one embodiment, the positive and negative heat-conducting member 1, 2 are thermally connected with the positive and negative tabs 61, 62 respectively. Therefore, the heat in the heat accumulated region such as the positive and negative tabs 61, 62 may be quickly transferred to the current collector in the electric core to ensure the temperature consistency of the battery, and consequently not only will heat not be accumulated on the positive and negative tabs 61, 62 to avoid potential safety risks, but also the temperature consistency of positive and negative electrodes of the battery may be ensured.

The ends of the positive heat-conducting member 1 and the negative heat-conducting member 2 are extended out of the electric core. As shown in Fig. 4, a first connector 71 is used for connecting the positive heat-conducting member 1 with the positive tab 61 by, for example, welding, bonding or riveting. And a second connector 72 is used for connecting the negative heat-conducting member 2 with the negative tab 62 by, for example, welding, bonding or riveting, thus conveniently connecting the positive heat-conducting member 1 with the positive tab 61 and connecting the negative heat-conducting member 2 with the negative tab 62 as well as avoiding poor connection such as breakage, shedding or virtual connection. In another embodiment, an upper portion of each of the first and second connectors 71, 72 may have a bending portion, through which simple connection between the positive heat-conducting member 1 and the positive tab 61 as well as between the negative heat-conducting member 2 and the negative tab 62 may be achieved to prevent damage to the positive and negative tabs 61, 62 respectively.

The shapes of the first and second connectors 71, 72 may be configured to be adapted to those of the positive and negative tabs 61, 62, to facilitate the connection between the first connector 71 and the positive tab 61 and between the second connector 72 and the negative tab 62 as well as shorten a current conduction path. In one embodiment, the first connector 71 is annular which is fitted over the first non-coating region, and the second connector 72 is annular which is fitted over the second non-coating region. In one embodiment, the thickness of the first and second connectors 71, 72 may range from about 1mm to about 10mm. In another embodiment, the thickness of the first and second connectors 71, 72 may range from about 3mm to about 5mm. In one embodiment, the first connector 71 and the positive tab 61 may be made of aluminum, and the second connector 72 and the negative tab 62 may be made of copper. The areas of the first connector 71 and the second connector 72 may be large to increase the current conducting area and the heat conducting area, thus not only reducing the internal resistance but also accelerating the conduction rate.

As shown in Fig. 4, a plurality of first electrical connecting elements 8 are connected between the first connector 71 and the positive heat-conducting member 1, and, alternatively, a plurality of second electrical connecting elements (not shown) are connected between the second connector 72 and the negative heat-conducting member 2. Therefore, the connection between the positive heat-conducting member 1 and the first connector 71 as well as between the negative heat-conducting member 2 and the second connector 72 may be achieved, which may be simple in operation and easy to weld, and may increase the current conducting area, reduce the internal resistance of the battery, enhance the rate discharge performance of the battery and increase the heat transfer rate in the battery. The shape and the number of the first and second electrical connecting elements may be determined as the condition may require. In one embodiment, the first and second electrical connecting elements, the first and second connectors 71, 72 and the positive and negative heat-conducting members 1, 2 may be welded finally to form the electric core. In another embodiment, the first and second electrical connecting elements and the first and second connectors 71, 72 may be formed into an integral member, and then the integral member and the positive and negative heat-conducting members 1, 2 may be welded to form the electric core. The first and second electrical connecting elements are made of metals, which may be identical with materials for the positive and negative tabs 61, 62 respectively.

As shown in Fig. 5, the battery comprises a battery housing 90 having two opening ends; a battery cover sealing the two opening ends; an electric core (not shown) received in the battery housing 90 which comprises two heat-conducting members; and an electrolyte filled in a space formed by the battery housing 90 and the battery cover.

As shown in Fig. 5, the battery is made by placing the electric core into the battery housing, filling the electrolyte into the battery housing, and sealing the battery housing. The battery cover includes a first cover 9 hermetically sealing a first end of the battery housing and a second cover hermetically sealing a second end of the battery housing, and the positive heat-conducting member 1 and the negative heat-conducting member 2 penetrate through the first cover 9 and the second cover respectively which are hermetically sealed with the positive heat-conducting member 1 and the negative heat-conducting member 2 respectively, thus conveniently connecting the positive heat-conducting member 1 with the positive tab 61 and connecting the negative heat-conducting member 2 with the negative tab 62 to avoid poor connection shortcomings such as breakage, shedding or virtual connection Therefore, the positive heat-conducting member 1 and the negative heat-conducting member 2 are used as a positive terminal or pole and a negative terminal or pole respectively for leading out currents, thus increasing the current conducting area and the heat conducting area and reducing the internal resistance of the battery. Moreover, because the positive heat-conducting member 1 and the negative heat-conducting member 2 as the positive terminal or pole and the negative terminal or pole respectively penetrate through the first cover 9 and the second cover respectively, the flow and the heat dissipation of the thermal conducting medium 5 may be conveniently achieved, thus reducing the internal temperature of the battery and increasing thermal dissipation more quickly.

Both ends of the positive heat-conducting member 1 penetrate through the first cover 9 and the second cover (not shown) at both ends of the battery housing 90, and first insulating members may be provided between the positive heat-conducting member 1 and the first cover 9 as well as between the positive heat-conducting member 1 and the second cover respectively to ensure hermetically sealing, thus leading out a positive current. In one embodiment, the positive heat-conducting member 1 may be firstly penetrated into an insulating spacer and then through the first and second covers, and then the first insulating member may be injection molded at high temperature, thus preventing the influence of liquid polymers with high temperature on an interior of the battery. In another embodiment, preformed insulating members formed by extrusion, such as conical rubber plugs, having a hollowed loudspeaker shape and having good leading-in performance may be provided between the positive heat-conducting member 1 and the first and second covers respectively. Both ends of the negative heat-conducting member 2 penetrate through the first cover 9 and the second cover at both ends of the battery housing, and second insulating members are disposed between the negative heat-conducting member 2 and the first cover 9 as well as between the negative heat-conducting member 2 and the second cover respectively to achieve hermetically sealing, thus leading out negative current.

The first cover 9 and the second cover may hermetically seal the first end and second end of the battery housing by laser welding, electron beam welding, bonding, riveting, hot-melt welding, ultrasonic welding, etc. respectively. Then, electrolyte may be filled in space formed by the battery housing 90 with the battery cover. And the battery is sealed and aged accordingly.

### Embodiment 2

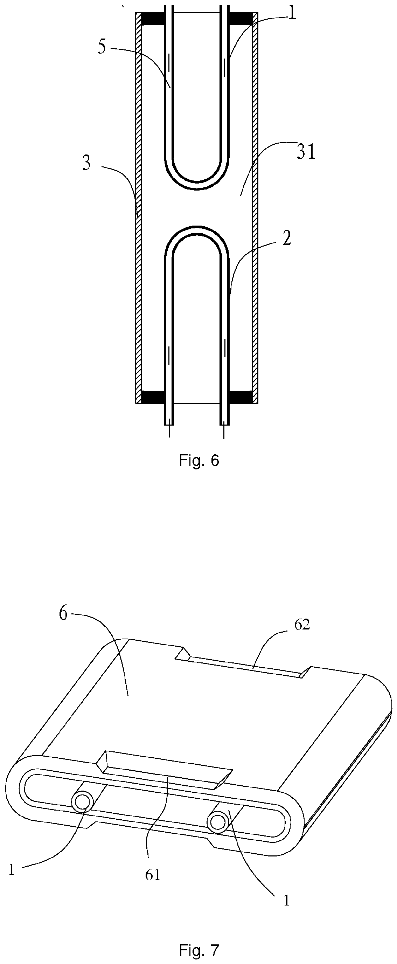

As shown in Figs. 6-9, the battery is formed substantially similar to that in Embodiment 1, with the exception that U-shaped tubes spaced apart from each other are used as the positive heat-conducting member 1 and the negative heat-conducting member 2, with the bottoms of the U-shaped tubes being opposed to each other. And injection molding is performed on surfaces of the heat-conducting members 1 and 2 so that an insulating roll core 3 is formed with ends of the positive heat-conducting member 1 and the negative heat-conducting member 2 being exposed outside the insulating roll core 3. The positive and negative heat-conducting members 1, 2 are at least partially received in the insulating roll core 3. The insulating filler 31 which is electrically insulating and thermally conductive is filled between the positive and negative heat-conducting members 1, 2. In one embodiment, an insulating layer may be formed on an external surface of each of the positive heat-conducting member 1 and the negative heat-conducting member 2.

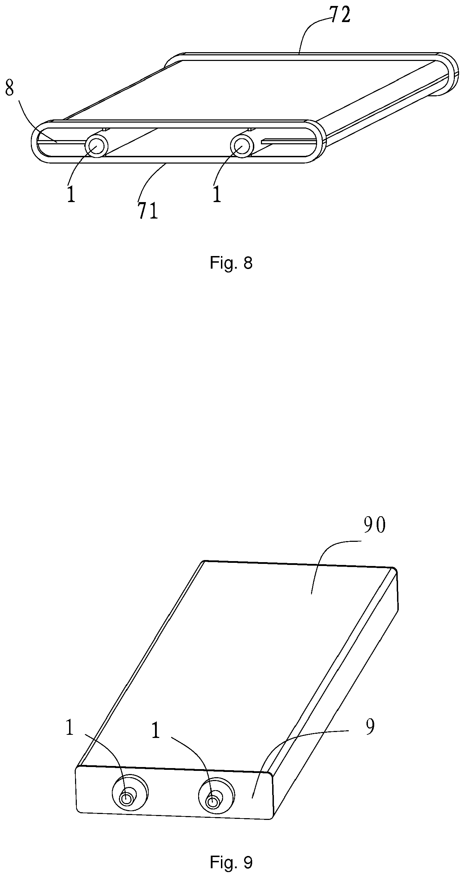

The battery cover includes a first cover 9 hermetically sealing a first end of the battery housing and a second cover hermetically sealing a second end of the battery housing 90. And both ends of the positive heat-conducting member 1 penetrate through the first cover 9, and both ends of the negative heat-conducting member 2 penetrate through the second cover. That is, the currents with the same polarity are led out from one end of the battery to avoid short circuit between positive and negative electrodes of the battery. At this time, as shown in Fig. 8, both ends of the positive heat-conducting member 1 may be connected with the first connector 71 through the plurality of first electrical connecting elements 8. And both ends of the negative heat-conducting member 2 may be connected with the second connector 72, thus increasing the current conducting area and the heat conducting area, reducing the internal resistance thereof, and accelerating the heat transfer rate accordingly.

As shown in Fig. 6, in the positive heat-conducting member 1, the thermal conducting medium 5 flows into the electric core from one end of the positive heat-conducting member 1 at the second end of the electric core 6, and flows out of the electric core 6 from the other end of the positive heat-conducting member 1 at the second end of the electric core 6. And in the negative heat-conducting member 2, the thermal conducting medium 5 flows into the electric core 6 from one end of the negative heat-conducting member 2 at the first end of the electric core 6, and flows out of the electric core 6 from the other end of the negative heat-conducting member 2 at the first end of the electric core 6.

As shown in Fig. 9, the battery is made by placing the electric core into a battery housing 90, filling electrolyte into the battery housing 90, sealing the battery housing 90 and forming accordingly. Both ends of the positive heat-conducting member 1 penetrate through the first cover 9, and a first insulating member may be provided between the positive heat-conducting member 1 and the first cover 9 to ensure hermetically sealing, thus leading out a positive current. Similarly, both ends of the negative heat-conducting member 2 penetrate through the second cover, and a second insulating member may be provided between the negative heat-conducting member 2 and the second cover to ensure hermetically sealing, thus leading out a negative current. The first cover 9 and the second cover may hermetically seal the first end and second end of the battery housing 90 by laser welding, electron beam welding, bonding, riveting, hot-melt welding, ultrasonic welding, etc.

With the battery according to Embodiment 2 of the present disclosure, because the current with identical polarity are led out from one end of the battery, short circuit between positive and negative electrodes of the battery may be avoided, both ends of the positive heat-conducting member 1 may be connected with the first connector 71, and both ends of the negative heat-conducting member 2 may be connected with the second connector 72, which may be easier to manufacture. It should be noted that each of the positive heat-conducting member 1 and the negative heat-conducting member 2 may include, but are not limited to, a U-shaped tube, a serpentine tube or a sinuous tube respectively, provided that both ends of the positive heat-conducting member 1 may penetrate through the first cover 9 and both ends of the negative heat-conducting member 2 may penetrate through the second cover respectively.

### Embodiment 3

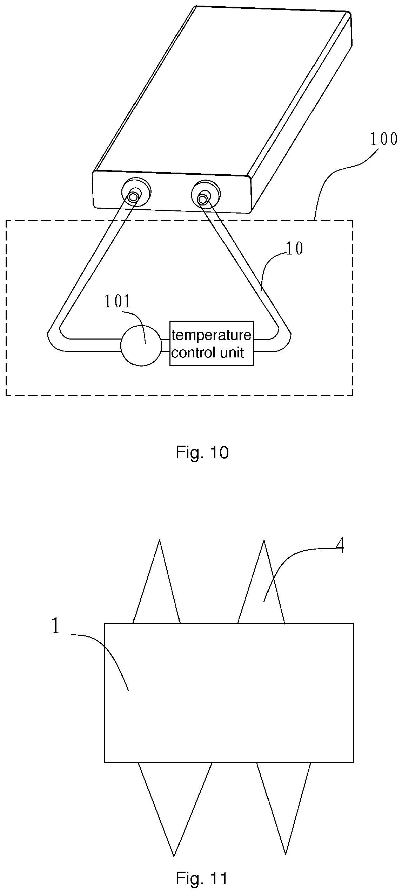

As shown in Fig. 10, the battery is formed substantially similar to that in Embodiment 2, with the exception that the battery may further comprise a cycling unit 100 connected with the heat-conducting members for driving the thermal conducting medium 5 flowing in the heat-conducting members. In one embodiment, the cycling unit 100 may comprise a pump 101. In another embodiment, the cycling unit may be an air duct.

In one embodiment, the battery further comprises a temperature control unit to control the temperature of the thermal conducting medium 5 flowing in the heat-conducting members.

In one embodiment, the cycling unit 100, the temperature control unit and both ends of the positive heat-conducting member 1 may be connected via a cycling pipe 10. The temperature control unit comprises: a temperature sensor, such as an induction probe, to sense the temperature of the thermal conducting medium 5; a cooling means for heating or cooling the thermal conducting medium 5 based on a temperature signal received from the temperature sensor; and a control unit to control the cooling means to heat or cool the thermal conducting medium 5 based on the temperature signal received from the temperature sensor. The control unit may comprise a heating plate, a heat dissipating member, and an intelligent control center for controlling the heating plate and the heat dissipating member. The intelligent control center may respond by comparing the temperature signal fed back from the induction probe with an optimal temperature for the battery operation so as to turn on or turn off the heating plate or the heat dissipating member, and may control the temperature of the thermal conducting medium 5 by controlling the heating plate or the heat dissipater so as to control the internal temperature of the battery.

Similarly, additional cycling system and temperature control unit may be provided between both ends of the negative heat-conducting member 2 penetrating through the other end of the battery. The battery may comprise one cycling system or two cycling systems.

### Embodiment 4

As shown in Figs. 11-15, a battery according to Embodiment 4 of the present disclosure is provided.

The positive heat-conducting member 1 and the negative heat-conducting member 2 are solid tubes arranged in parallel. And injection molding is performed on surfaces of the heat-conducting members 1 and 2 so that an insulating roll core 3 is formed with ends of the positive heat-conducting member 1 and the negative heat-conducting member 2 being exposed outside the insulating roll core 3. An insulating layer is formed on an external surface of each of the positive heat-conducting member 1 and the negative heat-conducting member 2.

The positive heat-conducting member 1 and the negative heat-conducting member 2 may be a straight or bending tube. The positive heat-conducting member 1 is made of aluminum and the negative heat-conducting member 2 is made of copper. The thickness of the positive and negative heat-conducting members 1, 2 may range from about 0.1mm to about 5mm, particularly, from about 1mm to about 3mm.

As shown in Fig. 11, the heat-conducting member, such as the positive heat-conducting member 1 or the negative heat-conducting member 2, is formed with projections 4 on an external surface and, alternatively, an internal surface thereof for heat dissipation. The projections 4 may have a shape of a needle, a cone, a sheet, a column, etc. The insulating filler 31 may be engineering plastics, for example, polyphenyl sulfide (PPS).

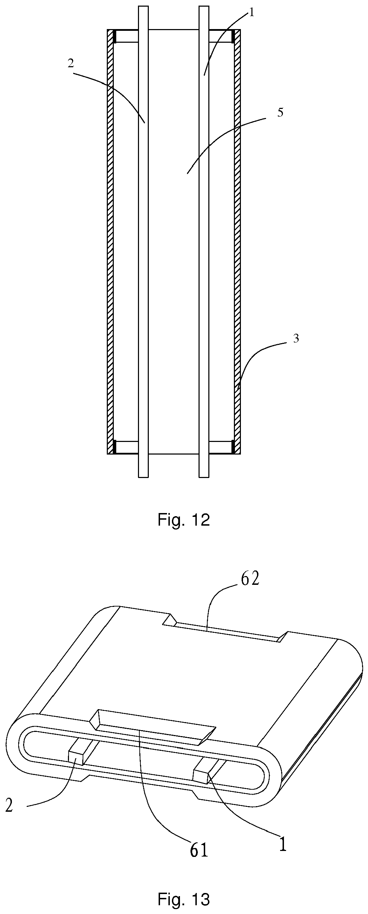

A positive plate having the positive tab 61, a negative plate having the negative tab 62 and a separator between the positive plate and the negative plate are wound on an external surface of the insulating roll core 3 to form the electric core, as shown in Fig. 13. The positive plate includes a first coating region with a positive material coated thereon and a first non-coating region without the positive material coated thereon; the negative plate includes a second coating region with a negative material coated thereon and a second non-coating region without the negative material coated thereon; the positive tab 61 is formed by the coiled first non-coating region at the first end of the electric core; and the negative tab 62 is formed by the coiled second non-coating region at the second end of the electric core.

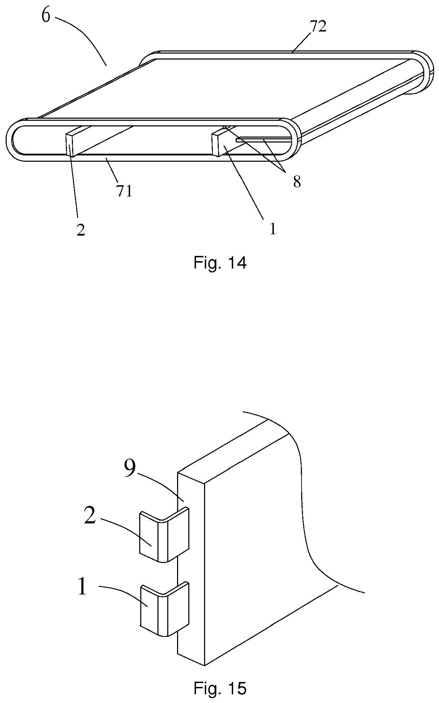

The ends of the positive heat-conducting member 1 and the negative heat-conducting member 2 are extended out of the electric core 6. As shown in Figs. 13 and 14, a first connector 71 is used for connecting the positive heat-conducting member 1 with the positive tab 61 by welding, bonding, riveting, etc. and a second connector 72 is used for connecting the negative heat-conducting member 2 with the negative tab 62 by welding, bonding, riveting, etc. The first and second connectors 71, 72 may be configured to be adapted to the positive and negative tabs 61, 62. In one embodiment, the first connector 71 is annular which is fitted over the positive tab 61, and the second connector 72 is annular which is fitted over the negative tab 62. In one embodiment, the thickness of the first and second connectors 71, 72 may range from about 1mm to about 10mm. In another embodiment, the thickness of the first and second connectors 71, 72 may range from about 3mm to about 5mm. In one embodiment, the first connector 71 and the positive tab 61 may be made of aluminum, and the second connector 72 and the negative tab 62 may be made of copper. The areas of the first connector 71 and the second connector 72 may be large to increase the current conducting area and the heat conducting area.

As shown in Fig. 14, a plurality of first electrical connecting elements 8 are connected between the first connector 71 and the positive heat-conducting member 1, and a plurality of second electrical connecting elements are connected between the second connector 72 and the negative heat-conducting member 2. The electrical connecting elements are made of metals.

As shown in Fig. 15, the battery is made by providing the electric core 6 into a battery housing, filling an electrolyte into the battery housing, sealing the battery housing and forming accordingly. A battery cover includes a first cover 9 hermetically sealing a first end of the battery housing and a second cover hermetically sealing a second end of the battery housing, and the positive heat-conducting member 1 and the negative heat-conducting member 2 penetrate through the first cover 9 and the second cover respectively which are hermetically sealed with the positive heat-conducting member 1 and the negative heat-conducting member 2 respectively.

### Embodiment 5

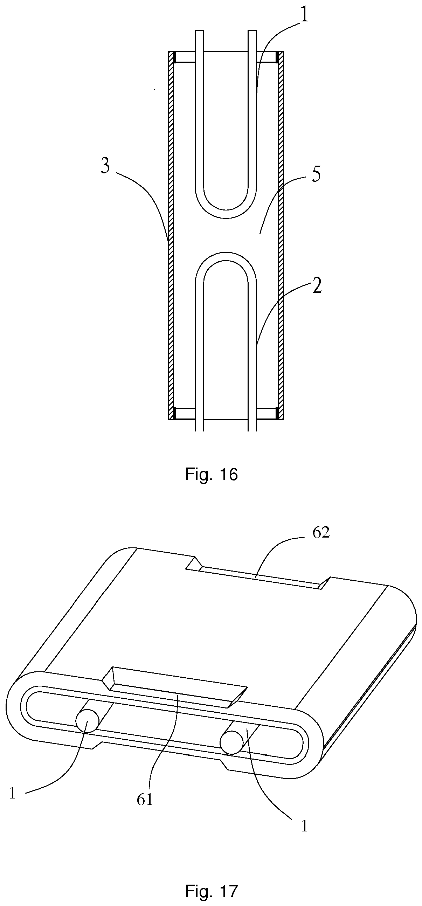

As shown in Figs. 16-19, the battery is made by a method substantially similar to that in Embodiment 4, with the exception that U-shaped solid tubes are used as the positive heat-conducting member 1 and the negative heat-conducting member 2.

The battery cover includes a first cover 9 hermetically sealing a first end of the battery housing and a second cover hermetically sealing a second end of the battery housing; and both ends of the positive heat-conducting member 1 penetrate through the first cover 9, and both ends of the negative heat-conducting member 2 penetrate through the second cover.

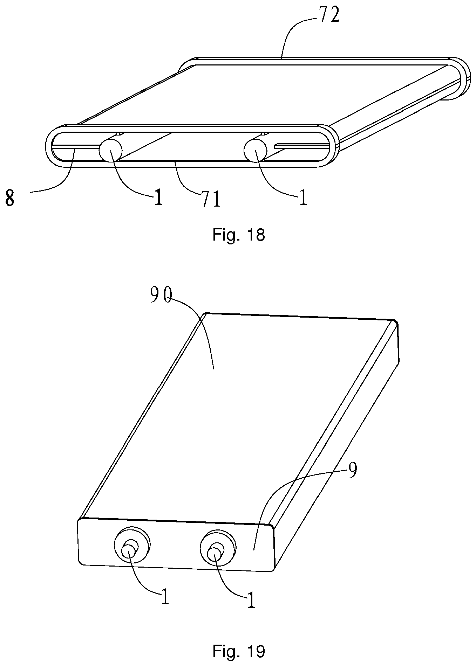

As shown in Fig. 19, the battery is made by placing the electric core into a battery housing 90, injecting an electrolyte into the battery housing 90, sealing the battery housing 90 and forming accordingly. Both ends of the positive heat-conducting member 1 penetrate through the first cover 9, and both ends of the negative heat-conducting member 2 penetrate through the second cover.

## Claims

1. A battery, comprising:
a battery housing having at least an opening end;
a battery cover sealing the opening end;
an electric core received in the battery housing which comprises at least a heat-conducting member, the heat-conducting member having at least an end penetrating through the battery cover; and
an electrolyte filled in a space formed by the battery housing with the battery cover;
the electric core comprising: an insulating roll core with the heat-conducting member at least partially received therein; and a positive plate having a positive tab, a negative plate having a negative tab and a separator between the positive plate and the negative plate which are wound on the insulating roll core, wherein the heat-conducting member is thermally connected with at least one of the positive tab and the negative tab;
the heat-conducting member comprising a positive heat-conducting member and a negative heat-conducting member which are electrically insulated from each other;
the positive heat-conducting member being electrically connected with the positive tab and insulated from the negative tab;
the negative heat-conducting member being electrically connected with the negative tab and insulated from the positive tab; and
the positive heat-conducting member and the negative heat-conducting member penetrating through the battery cover respectively;
an insulating layer being formed on an external surface of the heat-conducting member;
the positive heat-conducting member, the negative heat-conducting member and the insulating layer being integrally formed to form the insulating roll core which is wound with the positive plate, the negative plate and the separator between the positive plate and the negative plate to form the electric core.

2. The battery of claim 1, wherein the positive heat-conducting member is made of aluminum, and the negative heat-conducting member is made of copper.

3. The battery of claim 1, wherein the heat-conducting member is formed with projections on an external surface thereof for heat dissipation.

4. The battery of claim 1, wherein a thermal conducting medium flows in the heat-conducting member.

5. The battery of claim 1, wherein the heat conducting member is a hollowed tube with projections formed on an inner peripheral surface thereof.

6. The battery of claim 1, wherein the battery cover includes a first cover hermetically sealing a first end of the battery housing and a second cover hermetically sealing a second end of the battery housing, wherein
the positive heat-conducting member and the negative heat-conducting member penetrate through the first cover and the second cover respectively which are hermetically sealed with the positive heat-conducting member and the negative heat-conducting member respectively.

7. The battery of claim 1, wherein the battery cover includes a first cover hermetically sealing a first end of the battery housing and a second cover hermetically sealing a second end of the battery housing; and
both ends of the positive heat-conducting member penetrate through the first cover, and both ends of the negative heat-conducting member penetrate through the second cover.

8. The battery of claim 1, further comprising:
a first connector for connecting the positive heat-conducting member with the positive tab; and
a second connector for connecting the negative heat-conducting member with the negative tab.

9. The battery of claim 8, wherein:
the positive plate includes a first coating region with a positive material coated thereon and a first non-coating region without the positive material coated thereon;
the negative plate includes a second coating region with a negative material coated thereon and a second non-coating region without the negative material coated thereon;
the positive tab is formed by the coiled first non-coating region at the first end of the electric core; and
the negative tab is formed by the coiled second non-coating region at the second end of the electric core.

10. The battery of claim 9, wherein the first connector is annular which is fitted over the first non-coating region, and the second connector is annular which is fitted over the second non-coating region.

11. The battery of claim 10, wherein a plurality of first electrical connecting elements are connected between the first connector and the positive heat-conducting member, and a plurality of second electrical connecting elements are connected between the second connector and the negative heat-conducting member.

12. The battery of claim 1, wherein a filler which is electrically insulating and thermally conductive is filled between the negative and positive heat-conducting members.

13. The battery of claim 1, further comprising a cycling unit connected with the heat-conducting member for driving the thermal conducting medium to flow in the heat-conducting member.

14. The battery of claim 13, further comprising a temperature control unit to control the temperature of the thermal conducting medium flowing in the heat-conducting member.

15. The battery of claim 14, wherein the temperature control unit comprises:
a temperature sensor to measure the temperature of the thermal conducting medium;
a cooling means for heating or cooling the thermal conducting medium based on a temperature signal received from the temperature sensor; and
a control unit to control the cooling means to heat or cool the thermal conducting medium based on the temperature signal received from the temperature sensor.

## Patentansprüche

1. Batterie, umfassend:
ein Batteriegehäuse, das mindestens ein Öffnungsende aufweist;
eine Batterieabdeckung, die das Öffnungsende verschließt;
einen elektrischen Kern, der in dem Batteriegehäuse aufgenommen ist, der mindestens ein wärmeleitendes Element umfasst, wobei das wärmeleitende Element mindestens ein Ende aufweist, das durch die Batterieabdeckung hindurchdringt; und
ein Elektrolyt, der in einen Raum gefüllt ist, der durch das Batteriegehäuse mit der Batterieabdeckung gebildet ist;
wobei der elektrische Kern umfasst: einen isolierenden Rolllenkern mit dem mindestens teilweise darin aufgenommenen wärmeleitenden Element; und eine Plusplatte, die eine Pluslasche aufweist, eine Minusplatte, die eine Minuslasche aufweist und ein Trennelement zwischen der Plusplatte und der Minusplatte, die auf den isolierenden Rolllenkern gewickelt sind, wobei das wärmeleitende Element thermisch an mindestens eine von der Pluslasche und der Minuslasche angeschlossen ist;
das wärmeleitende Element umfassend ein wärmeleitendes Pluselement und ein wärmeleitendes Minuselement, die elektrisch voneinander isoliert sind;
wobei das wärmeleitende Pluselement elektrisch an die Pluslasche angeschlossen und von der Minuslasche isoliert ist;
wobei das wärmeleitende Minuselement elektrisch an die Minuslasche angeschlossen und von der Pluslasche isoliert ist; und
das wärmeleitende Pluselement und das wärmeleitende Minuselement jeweils durch die Batterieabdeckung hindurchdringen;
eine Isolierschicht auf einer Außenfläche des wärmeleitenden Elements gebildet ist;
das wärmeleitende Pluselement, das wärmeleitende Minuselement und die Isolierschicht integral gebildet sind, um den isolierenden Rolllenkern zu bilden, der mit der Plusplatte, der Minusplatte und dem Trennelement zwischen der Plusplatte und der Minusplatte gewickelt ist, um den elektrischen Kern zu bilden.

2. Batterie nach Anspruch 1, wobei das wärmeleitende Pluselement aus Aluminium ist, und das wärmeleitende Minuselement aus Kupfer ist.

3. Batterie nach Anspruch 1, wobei das wärmeleitende Element mit Vorsprüngen an einer Außenfläche davon zur Hitzeableitung gebildet ist.

4. Batterie nach Anspruch 1, wobei ein thermisch leitendes Medium in dem wärmeleitenden Element fließt.

5. Batterie nach Anspruch 1, wobei das wärmeleitende Element eine hohle Röhre mit Vorsprüngen ist, die an einer inneren Umfangsfläche davon gebildet sind.

6. Batterie nach Anspruch 1, wobei die Batterieabdeckung eine erste Abdeckung enthält, die ein erstes Ende des Batteriegehäuses hermetisch versiegelt, und eine zweite Abdeckung, die ein zweites Ende des Batteriegehäuses hermetisch versiegelt, wobei
das wärmeleitende Pluselement und das wärmeleitende Minuselement jeweils durch die erste Abdeckung und die zweite Abdeckung hindurchdringen, die hermetisch jeweils mit dem wärmeleitenden Pluselement und dem wärmeleitenden Minuselement versiegelt sind.

7. Batterie nach Anspruch 1, wobei die Batterieabdeckung eine erste Abdeckung enthält, die ein erstes Ende des Batteriegehäuses hermetisch versiegelt, und eine zweite Abdeckung, die ein zweites Ende des Batteriegehäuses hermetisch versiegelt; und
beide Enden des wärmeleitenden Pluselements durch die erste Abdeckung hindurchdringen, und beide Enden des wärmeleitenden Minuselements durch die zweite Abdeckung hindurchdringen.

8. Batterie nach Anspruch 1, weiter umfassend:
einen ersten Anschluss zum Anschließen des wärmeleitenden Pluselements an die Pluslasche; und
einen zweiten Anschluss zum Anschließen des wärmeleitenden Minuselements an die Minuslasche.

9. Batterie nach Anspruch 8, wobei:
die Plusplatte eine erste Beschichtungsregion mit einem darauf beschichteten Plus-Material und eine erste Nichtbeschichtungsregion ohne das darauf beschichtete Plus-Material enthält;
die Minusplatte eine zweite Beschichtungsregion mit einem darauf beschichteten Minus-Material und eine zweite Nichtbeschichtungsregion ohne das darauf beschichtete Minus-Material enthält;
die Pluslasche durch die zusammengerollte erste Nichtbeschichtungsregion an dem ersten Ende des elektrischen Kerns gebildet ist; und
die Minuslasche durch die zusammengerollte zweite Nichtbeschichtungsregion an dem zweiten Ende des elektrischen Kerns gebildet ist.

10. Batterie nach Anspruch 9, wobei der erste Anschluss ringförmig ist, der über der ersten Nichtbeschichtungsregion befestigt ist, und der zweite Anschluss ringförmig ist, der über der zweiten Nichtbeschichtungsregion befestigt ist.

11. Batterie nach Anspruch 10, wobei eine Vielzahl von ersten elektrisch Anschlusselementen zwischen dem ersten Anschluss und dem wärmeleitenden Pluselement angeschlossen sind, und eine Vielzahl von zweiten elektrisch Anschlusselementen zwischen dem zweiten Anschluss und dem wärmeleitenden Minuselement angeschlossen sind.

12. Batterie nach Anspruch 1, wobei ein Füllstoff, der elektrisch isolierend und thermisch leitfähig ist, zwischen das wärmeleitende Plus- und Minuselement gefüllt ist.

13. Batterie nach Anspruch 1, weiter umfassend eine Takteinheit, die an das wärmeleitende Element angeschlossen ist, um das thermisch leitende Medium dazu anzutreiben, in dem wärmeleitenden Element zu fließen.

14. Batterie nach Anspruch 13, weiter umfassend eine Temperaturregeleinheit zum Regeln der Temperatur des thermisch leitenden Mediums, das in dem wärmeleitenden Element fließt.

15. Batterie nach Anspruch 14, wobei die Temperaturregeleinheit folgendes umfasst:
einen Temperatursensor zum Messen der Temperatur des thermisch leitenden Mediums;
ein Kühlmittel zum Erhitzen oder Kühlen des thermisch leitenden Mediums beruhend auf einem Temperatursignal, das von dem Temperatursensor empfangen wird; und
eine Regeleinheit zum Regeln des Kühlmittels zum Erhitzen oder Kühlen des thermisch leitenden Mediums beruhend auf dem Temperatursignal, das von dem Temperatursensor empfangen wird.

## Revendications

1. Batterie, comprenant :
un boîtier de batterie ayant au moins une extrémité ouverte ;
un couvercle de batterie fermant hermétiquement l'extrémité ouverte ;
un noyau électrique logé dans le boîtier de batterie et comprenant au moins un élément conducteur de chaleur, l'élément conducteur de chaleur ayant au moins une extrémité pénétrant à travers le couvercle de batterie ; et
un électrolyte introduit dans un espace formé par le boîtier de batterie et le couvercle de batterie ;
le noyau électrique comprenant : un noyau d'enroulement isolant dans lequel l'élément conducteur de chaleur est logé au moins partiellement; et une plaque positive ayant une languette positive, une plaque négative ayant une languette négative et un séparateur entre la plaque positive et la plaque négative qui sont enroulés sur le noyau d'enroulement isolant, dans laquelle l'élément conducteur de chaleur est relié thermiquement à au moins une de la languette positive et de la languette négative ;
l'élément conducteur de chaleur comprenant un élément conducteur de chaleur positif et un élément conducteur de chaleur négatif qui sont isolés électriquement l'un de l'autre ;
l'élément conducteur de chaleur positif étant relié électriquement à la languette positive et isolé de la languette négative ;
l'élément conducteur de chaleur négatif étant relié électriquement à la languette négative et isolé de la languette positive ; et
l'élément conducteur de chaleur positif et l'élément conducteur de chaleur négatif pénétrant respectivement à travers le couvercle de batterie ;
une couche isolante étant formée sur une surface externe de l'élément conducteur de chaleur ;
l'élément conducteur de chaleur positif, l'élément conducteur de chaleur négatif et la couche isolante étant formés d'un seul tenant afin de former le noyau d'enroulement isolant qui est enroulé avec la plaque positive, la plaque négative et le séparateur entre la plaque positive et la plaque négative pour former le noyau électrique.

2. Batterie selon la revendication 1, dans laquelle l'élément conducteur de chaleur positif est en aluminium et l'élément conducteur de chaleur négatif est en cuivre.

3. Batterie selon la revendication 1, dans laquelle l'élément conducteur de chaleur est formé avec des saillies sur sa surface externe pour dissiper la chaleur.

4. Batterie selon la revendication 1, dans laquelle un milieu thermoconducteur circule dans l'élément conducteur de chaleur.

5. Batterie selon la revendication 1, dans laquelle l'élément conducteur de chaleur est un tube évidé comportant des saillies formées sur sa surface périphérique interne.

6. Batterie selon la revendication 1, dans laquelle le couvercle de batterie inclut un premier couvercle fermant hermétiquement une première extrémité du boîtier de batterie et un second couvercle fermant hermétiquement une seconde extrémité du boîtier de batterie, dans laquelle
l'élément conducteur de chaleur positif et l'élément conducteur de chaleur négatif pénètrent respectivement à travers le premier couvercle et le second couvercle qui sont respectivement fermés hermétiquement par l'élément conducteur de chaleur positif et l'élément conducteur de chaleur négatif.

7. Batterie selon la revendication 1, dans laquelle le couvercle de batterie inclut un premier couvercle fermant hermétiquement une première extrémité du boîtier de batterie et un second couvercle fermant hermétiquement une seconde extrémité du boîtier de batterie ; et
les deux extrémités de l'élément conducteur de chaleur positif pénètrent à travers le premier couvercle, et les deux extrémités de l'élément conducteur de chaleur négatif pénètrent à travers le second couvercle.

8. Batterie selon la revendication 1, comprenant en outre :
un premier connecteur pour relier l'élément conducteur de chaleur positif à la languette positive ; et
un second connecteur pour relier l'élément conducteur de chaleur négatif à la languette négative.

9. Batterie selon la revendication 8, dans laquelle :
la plaque positive inclut une première région de revêtement revêtue d'un matériau positif et une première région sans revêtement non-revêtue du matériau positif;
la plaque négative inclut une seconde région de revêtement revêtue d'un matériau négatif et une seconde région sans revêtement non-revêtue du matériau négatif;
la languette positive est formée par la première région sans revêtement enroulée à la première extrémité du noyau électrique ; et
la languette négative est formée par la seconde région sans revêtement enroulée à la seconde extrémité du noyau électrique.

10. Batterie selon la revendication 9, dans laquelle le premier connecteur est annulaire et ajusté sur la première région sans revêtement, et le second connecteur est annulaire et ajusté sur la seconde région sans revêtement.

11. Batterie selon la revendication 10, dans laquelle une pluralité de premiers éléments de liaison électrique sont reliés entre le premier connecteur et l'élément conducteur de chaleur positif, et une pluralité de seconds éléments de liaison électrique sont reliés entre le second connecteur et l'élément conducteur de chaleur négatif.

12. Batterie selon la revendication 1, dans laquelle une charge qui est isolante sur le plan électrique et conductrice sur le plan thermique est introduite entre les éléments conducteurs de chaleur positif et négatif.

13. Batterie selon la revendication 1, comprenant en outre une unité de cyclage reliée à l'élément conducteur de chaleur pour amener le milieu thermoconducteur à circuler dans l'élément conducteur de chaleur.

14. Batterie selon la revendication 13, comprenant en outre une unité de commande de température pour commander la température du milieu thermoconducteur circulant dans l'élément conducteur de chaleur.

15. Batterie selon la revendication 14, dans laquelle l'unité de commande de température comprend :
un capteur de température pour mesurer la température du milieu thermoconducteur ;
un moyen de refroidissement pour chauffer ou refroidir le milieu thermoconducteur en fonction d'un signal de température reçu du capteur de température ; et
une unité de commande pour commander au moyen de refroidissement de chauffer ou de refroidir le milieu thermoconducteur en fonction du signal de température reçu du capteur de température.
